# EUROPEAN PATENT SPECIFICATION

(11) **EP 3 810 382 B1**
(45) Date of publication and mention of the grant of the patent: **11.12.2024**
(21) Application number: 19733707.4
(22) Date of filing: 19.06.2019
(51) Int. Cl.: B27K 3/15, A45D 40/20, B27K 3/50, B43K 19/00, C08L 5/00

(54) **WOOD-ENCASED PENCIL**
HOLZUMHÜLLTER STIFT
CRAYON GAINÉ DE BOIS

(30) Priority: 19.06.2018 DE 202018103459 U
(43) Date of publication of application: 28.04.2021
(73) Proprietor: Schwan-STABILO Cosmetics GmbH & Co. KG, 90562 Heroldsberg (DE)
(72) Inventor: SPROGAR, Christian, 91088 Bubenreuth (DE); HEIDENREITER, Thomas, 90419 Nürnberg (DE); KAHLE, Ingolf, 90607 Rückersdorf (DE)
(74) Representative: Hoefer & Partner Patentanwälte mbB
(86) International application number: PCT/EP2019/066189
(87) International publication number: WO 2019/243417

(56) References cited:
- CN-A- 105 216 084
- CN-A- 105 747 208
- GB-A- 770 583
- JP-A- 2018 051 837
- JP-A- S58 212 407
- ANDREAS HENSEL ET AL: "L.: Phytochemistry, traditional use and current applications", JOURNAL OF ETHNOPHARMACOLOGY, ELSEVIER IRELAND LTD, IE, vol. 138, no. 3, 2 October 2011 (2011-10-02), pages 641 - 651, XP028397107, ISSN: 0378-8741, [retrieved on 20111006], DOI: 10.1016/J.JEP.2011.10.002

## Description

The invention relates to a wood-encased pencil suitable for accommodating a core with volatile constituents.

Wood-encased pencils have a diversity of uses. They consist in general of a core, which may be a lead-pencil, pencil-crayon or cosmetic core or any other core, inserted into a casing which consists of wood or a woodlike material. Wood is a popular material on account of its renewable raw material status and its pleasing tactility. Such pencils are typically produced by milling grooves into a slat, the cores being placed into the grooves. Thereafter a second slat is placed on, with matching opposite grooves, which cover the cores. The two slats are then glued to one another and the pencils are then cut from the slats. Wood-encased pencils typically have a point, which can be sharpened with a sharpener, and a rear end, which may be protected with a coating and/or a cap.

Cores which are used in such pencils may be produced by diverse materials depending on application. The use of pencil compounds formed from pigment and binder presents no problems. Because these cores contain virtually no volatile constituents, there are also no problems with evaporation of volatile fractions.

Within the field of cosmetology, however, it is common to use stick compounds comprising both non-volatile and volatile constituents. The purpose of the volatile constituents is generally to render the compound easy to apply and to influence the application and retention properties. The problem with such sticks is that volatile constituents may gradually be given off, causing the core on the one hand to become more brittle and fragile and less convenient to apply, and on the other hand causing the core to contract as a result of the volatile constituents given off, so that the core no longer sits firmly in the pencil sheath.

Attempts have already been made to overcome this problem by using a polymer casing rather than a wood casing. Many users, however, prefer wood-encased pencils because of the tactility. It is also possible to cover the wood pencil with a solvent-tight coating. Here again, however, the tactility and the sensation when using the pencil are impaired.

Attempts have also already been made to impregnate the wood pores with synthetic substances, such as acrylate, for example. This as well, however, causes the wood pencil to lose the impression it gives of being a natural product. Moreover, such methods entail a high level of technical complexity. JP2018051837, CN 105 216 084 A, GB770583, JP S58 212407 A, disclose compositions for impregnating wood.

It was an object of the invention, therefore, to provide a wood casing for wood-encased pencils that maintains the natural-product character of the wood pencil, continues to give the sensation of a wood pencil when gripped, permits decoration if desired, and endows the wood or woodlike material with barrier properties, without detriment to tactility and appearance.

A further aim is to provide a method with which a wood casing can be provided with barrier properties, this method being able to be carried out simply and without great technical complexity.

The problems specified above are solved with a wood-encased pencil as defined in the claims.

It has surprisingly been found that a wood casing which has been impregnated with a saccharide component as defined in the claims exhibits barrier properties which prevent the escape, completely or to a large extent, of volatile constituents of the kind typically found in cosmetic pencils, but also in pencil crayons and other kinds of pencils, even in the course of prolonged storage. It is possible accordingly to provide readily storable wood pencils in high quality wherein the good properties of the core are retained for a long time. It has been found, moreover, that the wood material treated in accordance with the invention can if desired be given customary decoration by means of varnishing, embossing, screen-printing, labelling and other customary methods.

The saccharide component of the invention comprises at least one monosaccharide and at least one oligosaccharide and at least one polybasic organic acid in solution in a vehicle, wherein the oligosaccharide is maltodextrin. There may be further constituents present. Without being tied to a theory, it is assumed that the mixture of saccharides and compounds having at least two carboxyl groups of the invention reacts with one another and generates chain or branch-like molecules which fill the pores in the wood and are held by adsorption or binding via OH groups which are plentiful in the wood. This structure forms a barrier which hinders or even prevents the escape of volatile materials. It is assumed, furthermore, without being attached to any theory, that this structure "holds on" to volatile constituents, in other words hindering them from migrating onwards and escaping via the tip of the pencil. Because the wood material is constructed on the basis of saccharide units, the compatibility between saccharide component and wood material is high. It has been found that when the casing is impregnated with the saccharide component of the invention, it is possible to lower the weight loss from cores comprising volatile constituents to below 3% by weight, in particular below 2.5% by weight, substantially below 2% by weight and even up to 1.6% by weight, measured within 12 weeks by a test as described in the examples. With the materials typically used, the weight loss may be 6% by weight or more, denoting a considerable detraction from the quality of the core compound and often rendering the pencils unusable.

By virtue of the fact that volatile constituents are retained by the saccharide component and not transported further, there is also compensation in the atmosphere in the wood that prevents further volatile molecules departing the core.

The advantageous properties are achieved if the material used for the casing is impregnated with a saccharide component. In connection with the present invention, wood material refers to any lignocellulose material suitable for the production of casings. This term, accordingly, embraces not only natural wood but also treated wood, wood material produced from woodchips or wood constituents, such as pressboard wood, plywood, groundwood and the like. The term "wood material" as used in accordance with the invention is therefore intended to cover any lignocellulosic material derived from wood. All of these materials are composed of cellulose, i.e. of a polysaccharide constructed from glucose molecules in β-1,4-glycosidic bonding.

The saccharide component of the invention used for impregnating or saturating the casing is a solution with at least two constituents, specifically at least one monosaccharide, at least one oligosaccharide and optionally at least one disaccharide and at least one polybasic organic acid. Further constituents may add to these. At least one saccharide is necessary, ensuring in particular the compatibility with the wood material. The term "saccharide" encompasses mono-, di- and oligosaccharides, i.e. molecules composed of one, two or more sugar units, the sugar unit being an aldose or ketose having 4 to 6, more particularly 5 or 6, preferably 6 carbon atoms. Examples of suitable monosaccharides are glucose, galactose, mannose, fructose, arabinose, xylose, or ribose. Highly suitable as a monosaccharide or as a building block of di- and oligosaccharides are glucose, galactose, fructose or mixtures thereof. Examples of disaccharides are maltose, lactose, sucrose and mixtures thereof.

Oligosaccharide here refers to saccharides composed of up to 30 - for example, 3 to 25 - sugar units, with suitable examples being oligosaccharides composed of 3 to 20 glucose units. According to the present invention, the oligosaccharide is maltodextrin, which may be obtained by enzymatic degradation of starch. Maltodextrins exist with different chain lengths. Especially suitable are those having a dextrose equivalent of 3 to 20, e.g. 10 to 20.

The saccharide component comprises at least one monosaccharide and at least one oligosaccharide, but may also comprise a mixture of different monosaccharides, different disaccharides, different oligosaccharides, or a mixture of different kinds of saccharide. It has been found that a mixture of at least one monosaccharide and at least one oligosaccharide yields particularly good results.

The second essential constituent of the saccharide component is a polybasic organic acid, i.e. a molecule which provides at least two carboxyl groups and in addition may also have further functional groups, especially hydroxyl groups. Carboxylic acids are especially suitable when they dissolve in the impregnating solution, i.e. in the solvent used, which in general is aqueous. Suitability is therefore possessed by linear saturated and unsaturated carboxylic acids having at least two carboxyl groups and having a chain length such that the acid is still soluble, e.g. with a chain length of 2 to 6 C-. The at least two carboxyl groups provide for the crosslinking and hence for the structuring of the resultant chains, and serve for the crosslinking and anchoring of the structure formed. It is assumed that the crosslinking between polybasic acids and polyhydric alcohols, namely the saccharides, generates the particularly compatible impregnation of the wood material and at the same time the high imperviosity.

As the polybasic acid it is possible to use known organic acids, such as citric acid, tartaric acid, oxalic acid, mucic acid, fumaric acid, aldaric acids, or mixtures of these acids. It has been found that citric acid is an especially well suited constituent of the saccharide component. It is thought that the reason for this is that the citric acid, as well as the three carboxyl groups also has a hydroxyl group, so contributing to particularly high compatibility with the saccharides and with the OH groups of the cellulose.

At least one acid is present; there may also be a mixture of different acids in the saccharide component.

The two constituents of the saccharide component, saccharide(s) and polybasic acid, are present in the form of a solution in a liquid vehicle. The liquid vehicle may be any solvent which is able to dissolve the saccharide and polybasic acid sufficiently, is compatible with wood material, does not adversely alter the wood and the saccharide component, and is not harmful to humans, animals and the environment. Aqueous solutions, particularly water, are suitable for this purpose. Water is typically used.

Further to the at least one polybasic organic acid, there may also be at least one monobasic organic acid included as well. It has been found that good results can also be achieved when a monobasic organic acid, such as acetic acid, lactic acid, an alduronic acid, mandelic acid or a mixture thereof, for example, is mixed with a polybasic organic acid, e.g. citric acid.

Present in solution in the saccharide component are saccharides on the one hand and acids on the other. The fraction of saccharides in the saccharide component is in a range from 0.5 to 50% by weight, based in each case on the weight of the completed impregnation solution, with the fraction of saccharide being dependent on factors including the nature of the particular saccharides used, the nature of the wood material, the nature and amount of the acid and the temperature and duration of the impregnating. A fraction of 1 to 40% by weight, e.g. 2 to 25% by weight, for example is suitable. Good results can be achieved with a fraction of 2.5 to 20% by weight, e.g. 4 to 15% by weight.

The fraction of polybasic organic acid in the saccharide component of the invention may be situated in a range from 0.5 to 25% by weight, based on the weight of the completed impregnating composition, e.g. between 1.5 and 22% by weight. Good results have been obtained in a range from 4.5 to 16.8% by weight.

If a monobasic acid is used, the fraction thereof is preferably in a range from 1 to 10% by weight, e.g. 1.5 to 7% by weight.

It has been found, moreover, that the addition of a polyol to the saccharide component further improves the result, a polyol here being a linear organic compound which has at least 4 hydroxyl groups but no other functional groups. Examples of a polyol are pentaerythritol or polyvinyl alcohol or a mixture thereof. Polyvinyl alcohols are available in numerous grades. Polyvinyl alcohols suitable for the present invention are those which at processing temperature and room temperature are fluid and are compatible with the other constituents, meaning that they remain in solution and are not precipitated. A suitable example is partially saponified PVA of the kind available commercially, preferably a PVA having a degree of hydrolysis of about 75% to 90%. Good results are achieved with polyvinyl alcohol having a viscosity in the range from 3 to 4 mPa.s, measured on a 4% strength solution at room temperature. Without being tied to any theory, it is assumed that the polyol as well as the polybasic acid contributes to effective crosslinking and compatibility and so further reinforces the sealing of the pores. If a polyol is used, the fraction thereof is preferably in a range between 0.5 and 8% by weight, e.g. 3 to 6% by weight, based in each case on the weight of the completed composition.

The wood-encased pencil of the invention is produced by impregnating wood material used for producing the pencil with the saccharide component as described above over a period of 10 minutes to 24 hours at a temperature in the range from 0 to 90°C. The pressure is not critical and may be between 1 and 20 bar; sub-atmospheric pressure may also be employed. The impregnation can be carried out under ambient conditions, a particular advantage. Also suitable, for example, is an impregnation carried out at 5 to 12 bar for 5 to 12 hours.

It has been found that the wood material ought to spend at least 10 minutes in the impregnating solution, since otherwise the impregnation is not sufficiently thorough. The optimum period of time in each case may be selected simply, depending on the thickness of the wood material, the particular impregnating solution used and the temperature employed. Impregnation for more than 24 hours produces no further effect and is therefore uneconomic. In one embodiment the wood material is placed into the impregnating solution, i.e. the saccharide component, overnight, i.e. for about 8 to 14 hours, preferably under ambient conditions. Likewise possible is the placing of the wood material, also dependent on the thickness, into an impregnating solution for 30 to 180 minutes with elevated temperature, e.g. at 30 to 90°C, more particularly 40 to 50°C. Impregnation may be carried out under ambient pressure or elevated pressure, as for example at a pressure of about 1 to 20 bar, e.g. 3 to 12 bar.

The temperature of the impregnation may be between 0 and 90°C. This likewise makes the method very simple, since a temperature in the region of room temperature can also be employed, meaning that there is no need for heating. The higher the temperature, the quicker the impregnation.

Both the wood material provided for producing the casing and the wood casing after it has been formed may be impregnated in the saccharide component.

The wood-encased pencil of the invention can therefore be produced very easily without any need to use environmentally harmful constituents and without great cost and complexity, since the wood material can simply be inserted into the saccharide component.

When impregnation is at an end, the completed pencils may either be left to lie at room temperature for drying or else may be dried in a known way by means of elevated temperature, in a drying cabinet, for example.

It has been found that a pencil sleeve impregnated with the saccharide component of the invention forms a good barrier to the evaporation of solvents such as volatile silicones and volatile hydrocarbons and that evaporation can be limited considerably. The pencils nevertheless remain amenable to sharpening and can be processed and decorated in a customary way. Furthermore, they retain the desired appealing tactility and appearance.

Without being tied to a theory, it is assumed that during the impregnation, the free OH groups of the cellulose fibres of the wood material become crosslinked with the OH groups of the polysaccharides and polyalcohols and with the carboxyl groups of the acids, thereby filling up free volume within the wood pores after drying.

The impregnation process may take place at room temperature, as is preferred, or else at other temperatures. The pressure may be either ambient pressure or moderately elevated pressure, e.g. a pressure of up to 10 bar. In one embodiment of the method of the invention, the wood material is first evacuated by the application of moderate sub-atmospheric pressure. Thereafter the impregnating solution is added. The wood material is subsequently dried. The drying may take place at room temperature or else at elevated temperature in order to reduce the drying time. Drying may take place in an inherently customary way. For example, the wood material may be removed from the impregnating solution and left to drip dry for up to 2 hours. After that it is customarily dried at elevated temperature, e.g. in a range from 30 up to no more than the boiling temperature of the solvent, e.g. 100°C in the case of water, until the wood material is dry; the drying conditions in this case ought to be set such that neither the wood material nor the saccharide component taken up into the wood is damaged. The skilled person knows of such methodologies. For example, the temperature can be increased in stages up to at most the temperature of the boiling point of the solvent - for example, the drying cabinet can be heated to 50 to 70°C within 15 to 60 minutes, this temperature can then be held for 1 to 5 hours, and then heating can be carried out within 15 to 60 minutes up to at most the temperature of the boiling point of the solvent, e.g. up to 100°C. After that, this temperature can be held at least until the weight is constant, such as for up to 24 hours, e.g. 8 to 14 hours overnight. A vacuum may be applied in order to accelerate drying. The optimum drying conditions in respect of time, temperature and, where appropriate, pressure may easily be determined by the skilled person by means of routine tests.

To determine the barrier properties of wood material, a test method as follows was carried out.

Wood material was impregnated as described above. Wooden boats were then formed from the wood material, and a core material was enclosed in these boats. These boats were then kept at 45°C for 12 weeks. From time to time and after 12 weeks, the weight loss was determined. The boats were subsequently opened and the appearance of the core was examined. In these tests it was found that boats made of untreated cedar wood had after just 10 weeks lost so many volatile constituents that the pencils were no longer usable. The cores had contracted. In the case of boats treated with the saccharide component of the invention, the weight loss after 12 weeks was low, i.e. below 3% by weight and down to 1.69% by weight.

In the case of this test, the quality of the wood material is regarded as sufficient in terms of imperviosity if after 12 weeks at 45°C the content of volatile constituents had not altered by more than 10% by weight. This value was achieved by all saccharide components according to the invention.

The invention is elucidated further in the examples which follow.

### Example 1

Wood material was placed into an impregnating solution containing 16.3% by weight of citric acid, 1.6% by weight of glucose, 7.1% by weight of maltodextrin and 1% by weight of PVA in aqueous solution. The wood material was subsequently dried as follows:
Preliminary drying/drip drying 1 h at 25°C
Heating to 65°C within 30 minutes
3 h at 65°C
Heating to 100°C within 30 minutes
12 h at 100°C

After cooling, the wood material was processed into a boat into which a core had been inserted. Moreover, for comparison, boats of untreated wood material were produced, and were equipped with the same core compound. The composition of the core compound embedded into the cedar wood boats was as follows:

**Table 1**

| INCI - US | K | KC | Value | Unit |
|---|---|---|---|---|
| Iron Oxides 77491/77492/77499 | Z | F | 28.943 | % |
| Synthetic Wax | Z | B | 14.473 | % |
| Isododecane | Z | B | 12 | % |
| Polybutene | Z | B | 11.182 | % |
| Hydrogenated Cottonseed Oil | Z | B | 6.578 | % |
| Hydrogenated Polyisobutene | Z | B | 5.333 | % |
| Hydrogenated Polydecene | Z | B | 5.333 | % |
| Hydrogenated Poy(C6-14 Olefin) | Z | B | 5.333 | % |
| Simmondsia Chinensis (Jojoba) Seed Oil | Z | B | 3.289 | % |
| Mica 77019 | Z | F | 1.973 | % |
| Ceresin | Z | B | 1.579 | % |
| Ferric Ferrocyanide 77510 | Z | F | 1.316 | % |
| Ozokerite | Z | B | 1.315 | % |
| Microcrystalline Wax | Z | B | 1.053 | % |
| Tocopherol | Z | B | 0.25 | % |
| Ascorbyl Palmitate | Z | B | 0.05 | % |
| | | | 100.0000 | % |

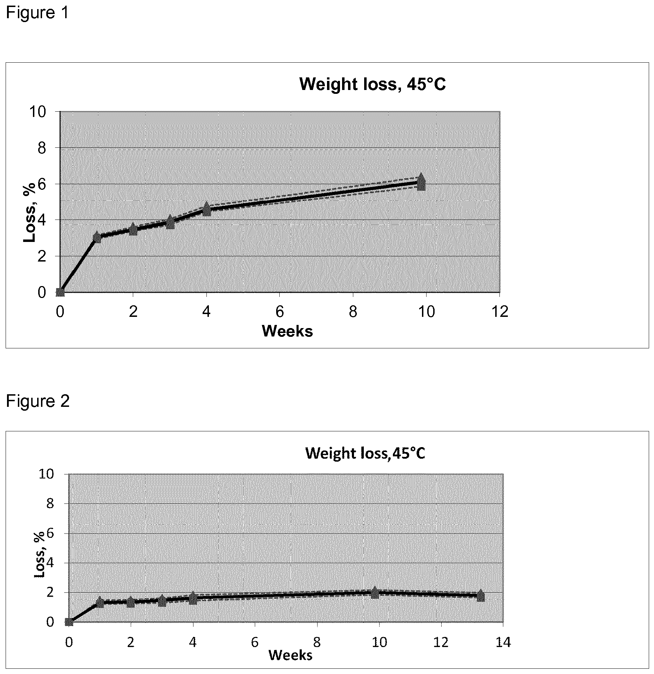

All of the boats were then sealed. The resulting boats were kept in a heating cabinet at 45°C for 12 weeks. The weight was determined in each case after 1, 2, 3, 4, 10 and 12 weeks and the weight loss was calculated accordingly. All of the values are average values, owing to the use of a plurality of boats for each test. The boats for this purpose were removed from the heating cabinet and weighed after cooling to room temperature. Figure 1 shows the weight loss for boats made from untreated wood material, and Figure 2 shows the weight loss for boats made from wood material treated in accordance with the invention.

It can clearly be seen that untreated wood is not impervious to volatile hydrocarbons. After just a week, the pencils were significantly drier, and after 10 weeks they were no longer usable. The cores had contracted. The test was therefore discontinued after 10 weeks.

Conversely, the boats made of wood material treated in accordance with the invention were still impervious even after 12 weeks; the weight loss was minimal. It was found that further criteria, such as decoration, sharpenability, processing, appearance, etc., were positively fulfilled.

### Example 2

Different saccharide components according to the invention were tested. For this purpose, wood material was inserted in each case into an impregnating solution as defined in Table 3. The wood material was subsequently processed to boats, in each of which a core was inserted. The composition of the core material embedded into the cedar boats was as follows:

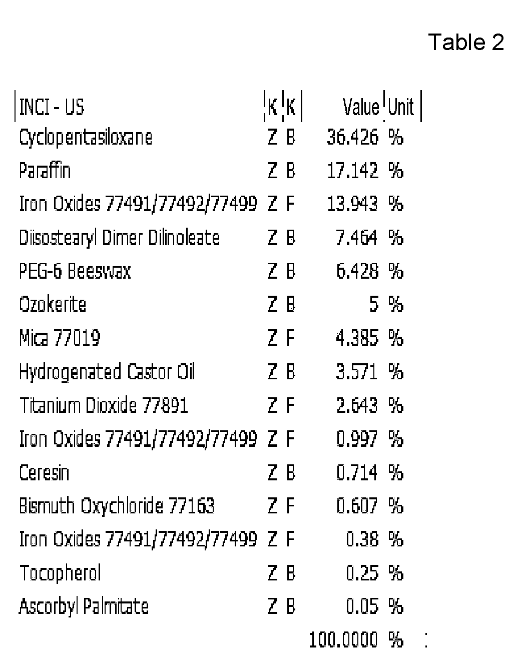

The boats were then sealed. The resulting boats were kept in a heating cabin at 45°C for 12 weeks. The weight loss was determined after 1, 2, 3, 4, 10 and 13 weeks. For that purpose, the boats were taken from the heating cabin and, after cooling to room temperature, were weighed. After 13 weeks, the boats were opened and the cores contained therein were investigated for their sharpenability, visual appearance, processing, etc. It was found that in the case of boats whose wood had been impregnated with the saccharide component of the invention, there was virtually no deviation in relation to decoratability, sharpenability, processing, visual appearance, and so on. Conversely, in the case of boats made from untreated wood, it was found that the core had contracted and after just one week was more significantly drier and after 10 weeks was no longer usable.

In the case of this test, the quality of the wood material was regarded as sufficient in terms of imperviosity if after 12 weeks at 45°C the weight loss was at most 3% by weight. This value was achieved by all saccharide components according to the invention, as shown in Table 3.

The compositions and the results are shown in Table 3 below.

**Table 3**

| Sample | Acetic acid | Citric acid | Glucose | Maltodextrin | Fructose | PVA | Weight loss(%) 45°C, 12 weeks |
|---|---|---|---|---|---|---|---|
| 1 | | | | | | | 6.10 (*) |
| 2 | | 16.7 | | | 27.8 | | 2.90 |
| 3 | 4.3 | 6.5 | | | 21.5 | | 2.94 |
| 4 | | 16.3 | 1.6 | 7.1 | | 1 | 1.98 |
| 5 | 4.9 | 4.9 | 14.6 | | | 2 | 1.69 |
| 6 | 2 | 4 | 28 | | | 1.6 | 1.97 |
| 7 | | 21.3 | | 12 | | | 2.46 |

| | | | | | | | |
|---|---|---|---|---|---|---|---|
| * Test discontinued after 10 weeks In Table 3 samples 1 to 3 and 5 to 7 do not fall under the claimed scope. | | | | | | | |

### Example 3

Wood material was inserted into an impregnating solution containing 16.3% by weight of citric acid, 1.6% by weight of glucose, 7.1% by weight of maltodextrin and 1% by weight of PVA in aqueous solution. The wood material was subsequently processed to boats using various core materials, and the boats were then tested as described in Example 1. Core materials used were as follows: the core material of Example 2, the core material with the following composition as per Table 4, and the core material with the following composition as per Table 5:

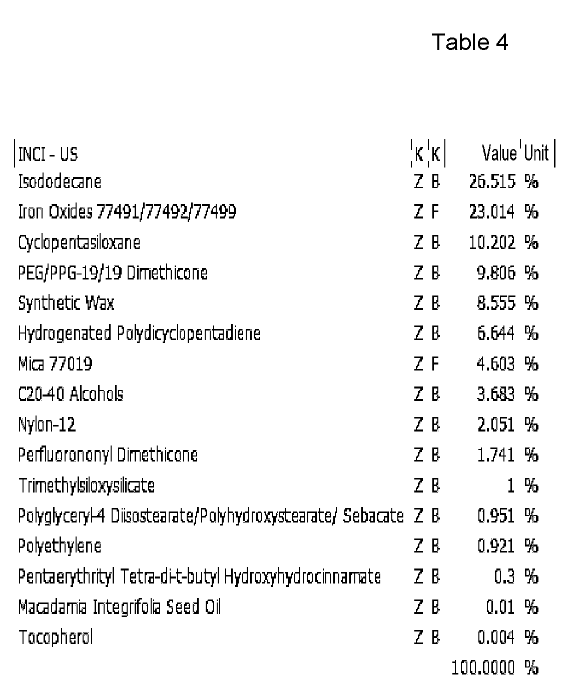

**Table 5**

| INCI - US | Value | Unit |
|---|---|---|
| Dimethicone 1.5 cSt | 25.112 | % |
| Synthetic Wax | 16.324 | % |
| Octyldodecanol | 12.557 | % |
| Polybutene | 12.557 | % |
| Cetearyl Behenate | 8.79 | % |
| Synthetic Fluorphlogopite | 6.278 | % |
| Disteardimonium Hectorite | 5.023 | % |
| Sorbitan Olivate | 5.023 | % |
| Iron Oxides 77491/77492/77499 | 2.511 | % |
| Propylene Carbonate | 1.507 | % |
| Titanium Dioxide 77891 | 1.381 | % |
| Synthetic Beeswax | 1.256 | % |
| Iron Oxides 77491/77492/77499 | 0.753 | % |
| Iron Oxides 77491/77492/77499 | 0.628 | % |
| Pentaerythrityl Tetra-di-t-butyl Hydroxyhydrocinnamate | 0.3 | % |
| | 100.0000 | % |

After 13 weeks the boats were opened and the cores contained therein were investigated for their sharpenability, visual appearance, processing, etc. It was found that in the case of boats whose wood had been impregnated with the saccharide component of the invention, there was virtually no deviation in respect of decoratability, sharpenability, processing, visual appearance, and so on. The weight loss was determined as described above, and the values found were as follows:

**Table 6**

| Core formula | Volatile constituents (target) | Weight loss [%] after 12 weeks at 45°C | | | Volatile constituents in the core | | Overall evaluation |
|---|---|---|---|---|---|---|---|
| | | minimum | average | maximum | average at start [%] | average 12 Wks/45°C [%] | |
| Core formula as per Example 2 | 36.4% cyclopentasiloxane | 1.67 | 1.99 | 2.41 | 37.51 | 37.20 | o.k. |
| Core formula as per Table 4 | 26.5% isododecane 10.2% cyclopentasiloxane | 2.07 | 2.34 | 2.93 | 36.66 | 34.99 | o.k. |
| Core formula as per Table 5 | 25.1% dimethicone 1.5 cSt | 0.91 | 1.20 | 1.89 | 26.03 | 25.20 | o.k. |

## Claims

1. Wood-encased pencil comprising a casing and a core, the casing consisting of wood material impregnated with a saccharide component, **characterized in that** the saccharide component comprises at least one monosaccharide and at least one oligosaccharide and at least one polybasic organic acid in solution in a vehicle, wherein the oligosaccharide is maltodextrin.

2. Wood-encased pencil according to Claim 1, **characterized in that** a monosaccharide of the saccharide component comprises glucose, galactose, mannose, fructose, arabinose, xylose and/or ribose.

3. Wood-encased pencil according to any of the preceding claims, **characterized in that** the saccharide component further comprises a disaccharide comprising maltose, lactose and/or sucrose.

4. Wood-encased pencil according to any of the preceding claims, **characterized in that** the maltodextrin has a dextrose equivalent of 3 to 20.

5. Wood-encased pencil according to any of the preceding claims, **characterized in that** the saccharide component comprises, as polybasic acid, citric acid, tartaric acid, oxalic acid, mucic acid, fumaric acid, an aldaric acid, or a mixture of at least two of these acids.

6. Wood-encased pencil according to any of the preceding claims, **characterized in that** the saccharide component further comprises at least one monobasic organic acid.

7. Wood-encased pencil according to Claim 6, **characterized in that** the monobasic organic acid is acetic acid, lactic acid, an alduronic acid, mandelic acid or a mixture thereof.

8. Wood-encased pencil according to any of the preceding claims, **characterized in that** the saccharide component further comprises a polyol.

9. Wood-encased pencil according to Claim 8, **characterized in that** the polyol is pentaerythritol, polyvinyl alcohol or a mixture thereof.

10. Method for impregnating wood, comprising impregnating the wood with a saccharide component as defined in any of Claims 1 to 9 for 10 minutes to 24 hours at a temperature of 0°C to 90°C.

11. Use of a composition comprising at least one monosaccharide and at least one oligosaccharide and at least one polybasic organic acid for impregnating wood, wherein the oligosaccharide is maltodextrin.

12. The use of Claim 11, **characterized in that** the composition further comprises citric acid optionally mixed with acetic acid, and also, optionally, polyvinyl alcohol.

## Patentansprüche

1. Holzgefasster Stift mit einer Hülle und einem Kern, wobei die Hülle aus Holzmaterial besteht, das mit einer Saccharidkomponente imprägniert ist, **dadurch gekennzeichnet, dass** die Saccharidkomponente mindestens ein Monosaccharid und mindestens ein Oligosaccharid und mindestens eine mehrbasige organische Säure in Lösung in einem Träger umfasst, wobei das Oligosaccharid Maltodextrin ist.

2. Holzgefasster Stift nach Anspruch 1, **dadurch gekennzeichnet, dass** ein Monosaccharid der Saccharidkomponente Glucose, Galactose, Mannose, Fructose, Arabinose, Xylose und/oder Ribose umfasst.

3. Holzgefasster Stift nach einem der vorhergehenden Ansprüche, **dadurch gekennzeichnet, dass** die Saccharidkomponente ferner ein Disaccharid umfasst, das Maltose, Lactose und/oder Saccharose umfasst.

4. Holzgefasster Stift nach einem der vorhergehenden Ansprüche, **dadurch gekennzeichnet, dass** das Maltodextrin ein Dextroseäquivalent von 3 bis 20 aufweist.

5. Holzgefasster Stift nach einem der vorhergehenden Ansprüche, **dadurch gekennzeichnet, dass** die Saccharidkomponente als mehrbasige Säure Zitronensäure, Weinsäure, Oxalsäure, Schleimsäure, Fumarsäure, eine Aldarsäure oder eine Mischung aus mindestens zwei dieser Säuren umfasst.

6. Holzgefasster Stift nach einem der vorhergehenden Ansprüche, **dadurch gekennzeichnet, dass** die Saccharidkomponente ferner mindestens eine einbasige organische Säure umfasst.

7. Holzgefasster Stift nach Anspruch 6, **dadurch gekennzeichnet, dass** die einbasige organische Säure Essigsäure, Milchsäure, eine Alduronsäure, Mandelsäure oder eine Mischung davon ist.

8. Holzgefasster Stift nach einem der vorhergehenden Ansprüche, **dadurch gekennzeichnet, dass** die Saccharidkomponente ferner ein Polyol umfasst.

9. Holzgefasster Stift nach Anspruch 8, **dadurch gekennzeichnet, dass** das Polyol Pentaerythrit, Polyvinylalkohol oder eine Mischung davon ist.

10. Verfahren zum Imprägnieren von Holz, umfassend das Imprägnieren des Holzes mit einer Saccharidkomponente, wie in einem der Ansprüche 1 bis 9 definiert, für 10 Minuten bis 24 Stunden bei einer Temperatur von 0°C bis 90°C.

11. Verwendung einer Zusammensetzung, die mindestens ein Monosaccharid und mindestens ein Oligosaccharid und mindestens eine mehrbasige organische Säure umfasst, zum Imprägnieren von Holz, wobei das Oligosaccharid Maltodextrin ist.

12. Verwendung nach Anspruch 11, **dadurch gekennzeichnet, dass** die Zusammensetzung ferner Zitronensäure, gegebenenfalls in Mischung mit Essigsäure, sowie gegebenenfalls Polyvinylalkohol enthält.

## Revendications

1. Crayon à gaine de bois comprenant une gaine et un noyau, la gaine étant constituée d'un matériau en bois imprégné d'un composant saccharide, **caractérisé en ce que** le composant saccharide comprend au moins un monosaccharide et au moins un oligosaccharide et au moins un acide organique polybasique en solution dans un véhicule, dans lequel l'oligosaccharide est la maltodextrine.

2. Crayon à gaine de bois selon la revendication 1, **caractérisé en ce qu'**un monosaccharide du composant saccharide comprend le glucose, le galactose, le mannose, le fructose, l'arabinose, le xylose et/ou le ribose.

3. Crayon à gaine de bois selon l'une des revendications précédentes, **caractérisé en ce que** le composant saccharide comprend en outre un disaccharide comprenant le maltose, le lactose et/ou le saccharose.

4. Crayon à gaine de bois selon l'une des revendications précédentes, **caractérisé en ce que** la maltodextrine a un équivalent en dextrose allant de 3 à 20.

5. Crayon à gaine de bois selon l'une des revendications précédentes, **caractérisé en ce que** le composant saccharide comprend, comme acide polybasique, l'acide citrique, l'acide tartrique, l'acide oxalique, l'acide mucique, l'acide fumarique, un acide aldarique ou un mélange d'au moins deux de ces acides.

6. Crayon à gaine de bois selon l'une des revendications précédentes, **caractérisé en ce que** le composant saccharide comprend en outre au moins un acide organique monobasique.

7. Crayon à gaine de bois selon la revendication 6, **caractérisé en ce que** l'acide organique monobasique est l'acide acétique, l'acide lactique, un acide alduronique, l'acide mandélique ou un mélange de ceux-ci.

8. Crayon à gaine de bois selon l'une des revendications précédentes, **caractérisé en ce que** le composant saccharide comprend en outre un polyol.

9. Crayon à gaine de bois selon la revendication 8, **caractérisé en ce que** le polyol est le pentaérythritol, l'alcool polyvinylique ou un mélange de ceux-ci.

10. Procédé d'imprégnation du bois, comprenant l'imprégnation du bois avec un composant saccharide tel que défini dans l'une des revendications 1 à 9 pendant 10 minutes à 24 heures à une température de 0°C à 90°C.

11. Utilisation d'une composition comprenant au moins un monosaccharide et au moins un oligosaccharide et au moins un acide organique polybasique pour imprégner le bois, dans laquelle l'oligosaccharide est la maltodextrine.

12. Utilisation de la revendication 11, **caractérisée en ce que** la composition comprend en outre de l'acide citrique éventuellement mélangé avec de l'acide acétique, ainsi que, éventuellement, de l'alcool polyvinylique.
